# EUROPEAN PATENT SPECIFICATION

(11) **EP 2 547 438 B1**
(45) Date of publication and mention of the grant of the patent: **23.01.2019**
(21) Application number: 11716984.7
(22) Date of filing: 17.03.2011
(51) Int. Cl.: B01J 19/12, C02F 1/32, C02F 1/72, B01J 8/04, B01J 8/28

(54) **PHOTOCATALYTIC REACTOR AND METHODS OF USE**
FOTOKATALYTISCHER REAKTOR UND VERWENDUNGSVERFAHREN
RÉACTEUR PHOTO-CATALYTIQUE ET SES PROCÉDÉS D'UTILISATION

(30) Priority: 17.03.2010 GB 201004443
(43) Date of publication of application: 23.01.2013
(73) Proprietor: Fully Evergreen Investment Limited, Hong Kong (HK)
(72) Inventor: FOSTER, Neil, Glasgow G2 5RZ (GB)
(74) Representative: Walker, Stephen
(86) International application number: PCT/GB2011/050536
(87) International publication number: WO 2011/114164

(56) References cited:
- WO-A1-03/086618
- WO-A1-2008/050119
- US-A- 5 516 492
- US-A- 5 683 589

## Description

The present invention relates to photocatalytic reactors and methods of use, and in particular to photocatalytic reactors which use a layer or bed of particulate or granular photocatalyst bodies for the treatment of a fluid. Aspects of the invention relate to the treatment of contaminated wastewater from industrial processes.

### Background to the invention

For a heterogeneous catalytic reaction between a solid phase catalyst and liquid phase reactant, the rate of reaction depends on, amongst other things, the exposed surface area of the catalyst and the efficiency of diffusion of molecules of the reactant to and from the surface of the catalyst.

Catalytic reactors are engineered to maximise the yield of product obtained by the chemical reactions for which they are designed. A catalytic reactor typically has a reaction chamber containing a catalyst and the reactant. The rate of a catalytic reaction may be limited by mass transfer and therefore by the number of reactant molecules brought into contact with an active site of the catalyst. The volume of the reactor, temperature and mixing of reactants are amongst many parameters that are considered when designing a catalytic reactor, as well as the distribution of the catalyst and the interaction between the reactant and an active site of the catalyst.

Mass transfer is the movement of mass from high concentration to low concentration. In catalysis it refers more specifically to the diffusion of reactant molecules to and from an active site of the catalyst. The rate-limiting effects of mass transfer become particularly prevalent when the concentration of the reactant is low, for example when the concentration of reactant is most conveniently measured in parts-per-billion (ppb). The concentrations of, for example, industrial and pharmaceutical residues, herbicides and pesticides are commonly considered a hazard at concentrations in the ppb range. Mass transfer is therefore a major limiting factor in the industrial-scale treatment of water, for example by Advanced Oxidation Processes (AOP).

Catalytic reactors have been proposed to try and address the problem of mass transfer. It is known that matching the reactor configuration and the physical and chemical properties of the catalyst helps to address the effects of mass transfer.

International patent publication number WO 2008/050119 describes a photocatalytic reactor comprising a foraminated member which supports mobile photocatalyst particles. An aeration device causes gas bubbles to rise from the foraminated member and agitate the mobile photocatalyst particles for even illumination by an ultraviolet light source. Agitation of the catalyst may improve mass transfer of molecules in the liquid which is to be treated to the surface of the photocatalyst particles.

Japanese patent publication number JP2004-322039 describes a photocatalytic system which relies on the recirculation of free flowing photocatalyst bodies in the reaction stream and past a light source. Discharge of the bodies from the reaction chamber is delayed by the use of a partition plate to prevent clogging of a filter and to increase the time that the light is incident on the photocatalyst bodies.

United States patent publication number US 2009/145855 describes a reaction system which uses a helical coil of transparent material on which is a thin coating of photocatalytic material, oriented around a light source.

United States patent US 5,790,934 describes a reactor for the photocatalysed conversion of contaminants in a fluid stream. A coating of photocatalyst is deposited on multiple non-intersecting fins. The reactor is designed to provide a reactor with low pressure drop and adequate mass transfer of the contaminant to the photocatalyst.

To increase the performance of catalytic reactors and in particular photocatalytic reactors, further reactor development is necessary to improve the intimate interactions between the reactant and photocatalyst particles in the presence of a light source. This is particularly important when considerations of the footprint size and energy consumption of the reactors become commercially significant.

It is an object of the present invention to improve the efficiency of the interaction between a reactant molecule and an active site of a photocatalyst. It is a further object of the present invention to improve the mass transfer of molecules in the fluid to the photocatalyst particles. Another object of the invention is to increase the path length of fluids moving through a layer of mobile photocatalyst particles. Other objects of the present invention will become apparent from the following description.

### Summary of the invention

According to a first aspect of the present invention there is provided an apparatus for carrying out a photocatalytic reaction on a liquid, the apparatus comprising:
a reaction chamber having a longitudinal axis and comprising a fluid inlet and a fluid outlet displaced in a longitudinal direction of the reaction chamber;
a layer of mobile photocatalyst particles; and
a bearing surface for the layer of mobile photocatalyst particles disposed between the fluid inlet and the fluid outlet, such that in use a liquid to be treated flows between the fluid inlet and the fluid outlet and contacts the layer of mobile photocatalyst particles;
wherein the apparatus further comprises at least one formation comprising one or more blades configured to redirect the flow of the liquid to be treated and introduce a circular, elliptical, rotational or helical component to the flow through the layer of mobile photocatalyst particles to agitate or mobilise the mobile photocatalyst particles.

In the context of this specification, "mobile photocatalyst particles" refers to discrete particles or bodies of photocatalyst material, which are separable from one another and substantially unattached to one another and the reaction chamber. Thus the mobile photocatalyst particles may be moveable and disposed relatively to one another in the layer in no particular ordered arrangement or distribution. The mobile nature of the photocatalyst particles facilitates forming a layer having a disordered, random arrangement of particles.

The apparatus increases the path length of reactants in the fluid and contact time of the fluid with the layer of photocatalyst particles. The apparatus therefore increases the residence time of the fluid in the reaction chamber and thereby increases the time the fluid is in contact with the photocatalyst particles, raising the likelihood of an interaction or reaction between reactants and active sites on the photocatalyst particles.

The at least one formation may be configured to induce turbulent flow of the fluid in the reaction chamber.

The apparatus may comprise a light source oriented in the longitudinal direction of the reaction chamber, and the formation may be configured to introduce a circular, elliptical, rotational or helical flow component relative to or around an axis of the light source. The light source may for example be an ultraviolet lamp.

The apparatus may comprise a tubular member, and the formation may be configured to introduce a circular, elliptical, rotational or helical flow component relative to or around an axis of the tubular member. The tubular member may be oriented in a longitudinal direction of the reaction chamber, and may for example be made of borosilicate glass. A surface of the tubular member may have a reflective coating. The reflective coating may improve the distribution of light within the reaction chamber.

The formation may be formed in a flow member arranged across the longitudinal axis of the apparatus. Embodiments of the invention may comprise multiple formations formed in a single flow member, to create different flow patterns in different parts of the cross-sectional area of the reaction chamber. For example, a flow member may comprise an arrangement of stators or slots to introduce a circular, rotational or helical flow component to the fluid in a clockwise direction in one part of the cross-section of the reaction chamber, and a circular, rotational or helical flow component to the fluid in a the same or the opposing direction in another part of the cross-section of the reaction chamber. Thus a number of vortex-like flow patterns about the longitudinal direction of the reaction chamber may be formed simultaneously.

The mobile photocatalyst particles may comprise moulded or extruded bodies which may comprise titanium dioxide. The mobile photocatalyst particles may comprise a catalyst support on which the titanium dioxide is deposited. Preferably, the mobile photocatalyst particles are in the form of pellets or are substantially cylindrical. The mobile photocatalyst particles may have a minimum dimension of greater than approximately 1mm, and may have a maximum dimension of less than approximately 20mm. In a preferred embodiment, the mobile photocatalyst particles are substantially cylindrical, and have a diameter in the range of approximately 1mm to 8mm, and a length in the range of approximately 4 mm to 20mm. In a particular preferred embodiment, the mobile photocatalyst particles have a diameter of around 4mm and/or a length of around 5mm to 10mm.

The size and density of the photocatalyst particles may be chosen such that they are negatively buoyant in the fluid flowing in the apparatus, and may therefore rest on the bearing surface. The bearing surface may therefore be a support surface (disposed beneath the layer) for a layer of negatively buoyant mobile photocatalyst particles.

The layer of photocatalyst particles may extend transversely across the longitudinal axis of the reaction chamber. In one embodiment, the bearing surface and the layer of photocatalyst particles are arranged across the longitudinal direction of the reaction chamber. The bearing surface may comprise one or more apertures to allow the passage of fluid therethrough. The apertures may be shaped and sized to prevent the passage of the photocatalyst particles.

The reaction chamber may comprise a plurality of spatially separated cells or sub-chambers, and each cell or sub-chamber may comprise a layer of mobile photocatalyst particles. The cells or sub-chambers may be formed from a plurality of bearing surfaces, each having a corresponding layer of photocatalyst particles. The plurality of bearing surfaces may be displaced from one another in the chamber along the longitudinal direction of the chamber, such that the fluid passes sequentially through the sub-chambers.

Where the reaction chamber comprises a plurality of displaced cells or sub-chambers, each layer of photocatalyst particles may have a corresponding formation to create turbulent flow which contacts that layer of photocatalyst particles.

The longitudinal axis of the reaction chamber may be oriented substantially vertically, such that the flow of fluid through the apparatus is substantially in a vertical direction (this may be referred to as the "main flow direction"). The at least one formation may therefore be arranged to redirect the flow of fluid from a substantially vertical flow.

According to a second aspect of the invention there is provided a method of carrying out a photocatalytic reaction, the method comprising:
providing a layer of mobile photocatalyst particles on a bearing surface within a reaction chamber;
providing a flow of liquid to be treated through the reaction chamber so as to contact the photocatalyst particles;
redirecting the flow of liquid to be treated and introducing a circular, elliptical, rotational or helical component to the flow through the layer of mobile photocatalyst particles to agitate or mobilise the mobile photocatalyst particles.

The method may further comprise the step of providing light within a predetermined range of wavelengths to the reaction chamber. The provided light may be oriented along a longitudinal direction of the reaction chamber. The predetermined range of wavelengths may include ultraviolet light.

The flow of fluid may have different flow patterns in different parts of a cross-sectional area of the reaction chamber.

Embodiments of the second aspect of the present invention may comprise the preferred or optional features of the first aspect of the present invention and vice versa.

The first and second aspects of the invention and their embodiments deliver benefits to mass transfer and reaction efficiency by redirecting flow in the reaction chamber through the layer of mobile photocatalyst particles to agitate the photocatalyst particles in the layer. The particles are sufficiently mobile to be moved by the flow (which may be turbulent), and as the photocatalyst particles move, different parts of their surfaces are exposed to light from the light source. In addition, agitation of the photocatalyst particles further improves the mass transfer of molecules in the fluid to and from the surface of the photocatalyst particles. Also, as the photocatalyst particles move, their surfaces may be cleaned by their contact with other photocatalyst particles. The cleaning may remove scale deposits that build up on the surfaces of the photocatalyst particles exposed to the fluid.

Aspects and embodiments of the invention agitate the particles of photocatalyst by the turbulent or disrupted flow of the fluid in the reaction chamber. Such an arrangement is distinguished from the system disclosed in WO 2008/050119, which relies on the generation of gas bubbles in the reaction chamber in order to agitate the catalyst. However, embodiments of the present invention can provide additional agitation of the photocatalyst particles by delivering gas bubbles to the reaction chamber which agitate the particles in use. As the photocatalyst particles move, their surfaces may be cleaned by their contact with other photocatalyst particles. The cleaning may remove scale deposits that build up on the surfaces of the photocatalyst particles exposed to the fluid. In combination with the turbulent flow systems of this aspect of the invention, the provision of gas bubbles for additional agitation in the manner described in WO 2008/050119 may offer improved operation. However, it should be noted that agitation of the photocatalyst particles by gas bubbles is not an essential feature of the invention, and in some cases is undesirable due to the tendency to generate foam at the surface of the liquid.

The apparatus may comprise an aeration system which is configured to deliver gas bubbles to the reaction chamber. The gas bubbles may comprise oxygen, ozone or air. The reaction chamber may comprise a bleed valve for the removal of gas bubbles.

### Brief Description of Drawings

There will now be described, by way of example only, various embodiments of the invention with reference to the drawings, of which:
Figures 1A to 1C present a reactor in accordance with an embodiment of the invention shown in perspective view, in longitudinal section, and in cross section respectively;
Figure 2 presents schematically a representation of a single reaction cell and liquid flow pattern of the embodiment of Figures 1A to 1C, shown in longitudinal section;
Figure 3 presents schematically a representation of a reactor system implementing the reactor of Figures 1A to 1C and an aeration system;
Figures 4A to 4C present a reactor in accordance with an alternative embodiment of the invention, shown respectively in perspective view, in cross-section, and in plan view;
Figure 5 presents schematically a representation of a plate in accordance with the embodiment of Figures 4A to 4C, shown in plan view;
Figures 6A and 6B present a reactor in accordance with a further alternative embodiment of the invention, shown in perspective view and in cross-section respectively;
Figures 7A to 7C present schematically the operation of the embodiment of Figures 6A and 6B;
Figure 8 presents schematically a representation of a reactor system implementing the reactor of Figures 6A and 6B and an aeration system;
Figure 9 presents schematically a representation of a reactor system implementing the reactor of an alternative embodiment of the invention and an aeration system; and
Figure 10 presents schematically a representation of a reactor system implementing the reactor of an alternative embodiment of the invention and an aeration system.

### Detailed description of the preferred embodiments

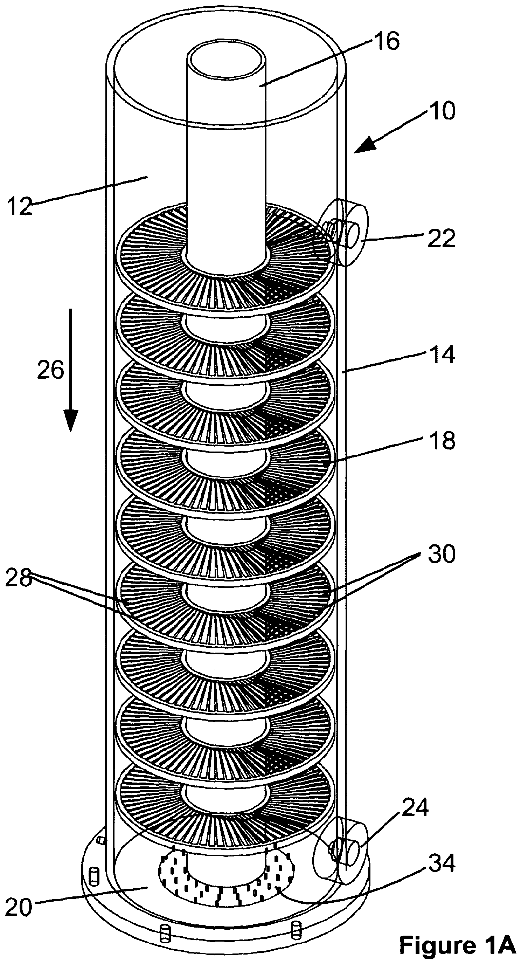

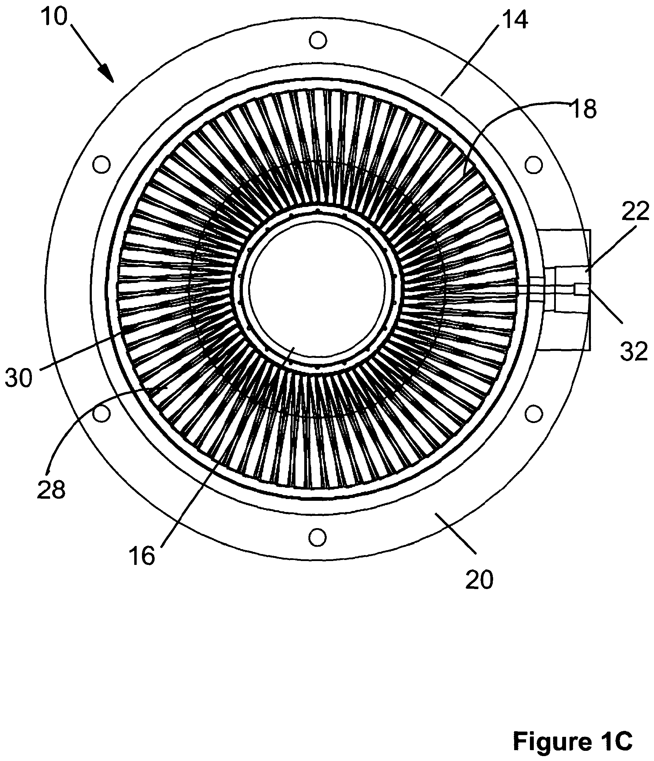

Referring firstly to Figures 1A to 1C, there is shown a reactor 10 in accordance with an embodiment of the invention shown in perspective view, in longitudinal section, and in cross section respectively. The reactor 10 is configured as a photocatalytic reactor and comprises a flow-through reaction chamber 12 defined by a wall 14 and a base plate 20.

Reactor 10 is well suited to for example the treatment of contaminated wastewater from a variety of industrial processes. Contaminated wastewater from these processes often contains hydrocarbons including glycols, surfactants and other soluble compounds. Due to their solubility these compounds are difficult to remove by traditional treatment methods. It is known that these compounds are amenable to destruction using photocatalytic systems however the reactions are inefficient and are not easily scaled-up to plant size. This embodiment is described in context of wastewater, although it has application to other liquid treatments and also to the treatment of contaminated gases.

Inside the reaction chamber 12 there is provided an ultraviolet lamp 16, mounted longitudinally and substantially centrally in the reaction chamber 12. The wall 14 of the reaction chamber 12 is stainless steel. A reflective coating of aluminium paint has been applied to the inside surface of the wall 14 to improve the distribution of light within the reaction chamber 12. An inlet 22 and an outlet 24 in the wall 14 provide fluid communication between the reaction chamber 12 and the outside of the reactor 10. In use, liquid flows through the reaction chamber 12 between the inlet 22 and outlet 24 in the general direction of flow indicated by the arrow 26. The general direction of flow 26 is parallel to the longitudinal axis of the reaction chamber 12 and the longitudinal axis of the ultraviolet lamp 16.

Formations or stators 18 surround the ultraviolet lamp 16 are spatially separated along the longitudinal axis of reaction chamber 12, in this case at regular intervals, and affect the flow of liquid as will be described below. Each stator 18 also provides a bearing surface on which a layer of photocatalyst particles (not shown) is disposed. Each stator 18 has blades 28 and slots 30 that are configured to induce turbulent flow in the liquid, such that the liquid leaving the stator 18 has a flow component which is circular or helical. The arrangement and spacing of the stators 18 and ultraviolet lamp 16 is chosen to provide even and complete illumination of the layer of photocatalyst particles disposed on each stator 18.

The photocatalyst particles are moulded or extruded bodies in the form of pellets, and comprise titanium dioxide (TiO₂) on a catalyst support. The particles are mobile in the sense that they are discrete particles or bodies, which are separable from one another and substantially unattached to one another and the reaction chamber. Thus the mobile photocatalyst particles can be moved and disposed relatively to one another in the layer in no particular ordered arrangement or distribution. The density of the photocatalyst particles is such that the particles rest on the stator 18 to form a layer of photocatalyst particles on each stator 18. The size and shape of the photocatalyst particles and the slots 30 in the stator 18 are selected such that the photocatalyst particles do not pass through the slots 30 in the stator 18. In use the liquid flows through interstices formed in the layer of photocatalyst particles.

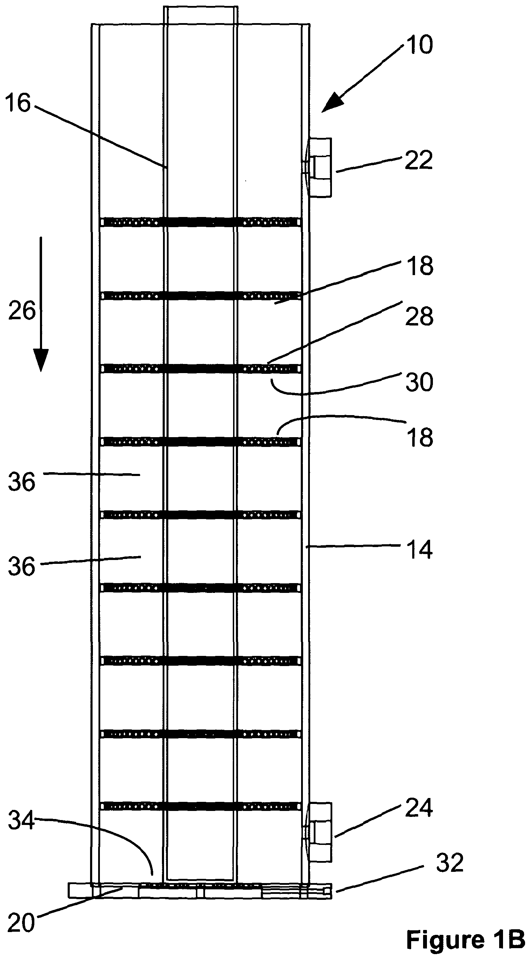

As most clearly shown in Figure 1B, the volume of the reaction chamber 12 between a stator 18 and an adjacent stator 18 defines a cell or sub-chamber 36 in which the reaction takes place. The outer edges of the stators 18 contact the inner surface of the wall 14. The liquid flow is thereby confined to be within the reaction chamber 12 and the reaction cells 36. The stators 18 are secured to the wall 14 of the reactor 10, such that all liquid flow between the inlet 22 and outlet 24 must pass through the slots 30 of each stator 18 and through each reaction cell 36. In use, the slots 30 cause the liquid to swirl around the ultraviolet lamp 16 located at the centre of the reaction chamber 12.

The reactor 10 also comprises a gas inlet 32 and diffuser 34 for aeration and/or further aeration of the liquid in the reaction chamber 12.

In an alternative embodiment, the wall 14 of the reaction chamber 12 is quartz glass, borosilicate glass or poly(methylmethacrylate) (PMMA). The wall 14 is therefore transparent and the light source is natural light and therefore located outside the reaction chamber 12. In a further alternative embodiment, the wall 14 of the reaction chamber 12 comprises a window. The window is quartz glass, borosilicate glass or poly(methylmethacrylate) (PMMA).

In yet a further alternative embodiment the lamp 16 is mounted perpendicular to the general direction of flow indicated by the arrow 26.

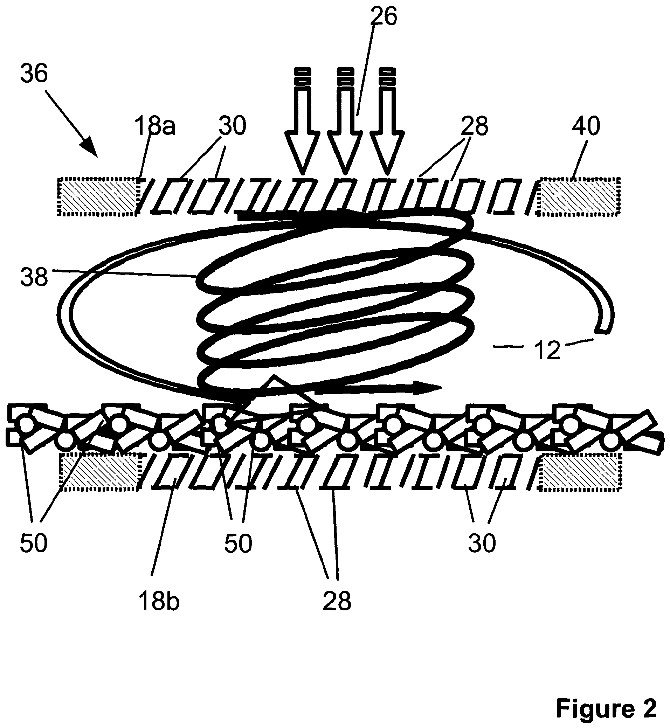

In Figure 2 there is shown schematically a representation of a single reaction cell 36 and liquid flow pattern which demonstrates the principles of the invention in the context of the embodiment of Figure 1A to 1C. In Figure 2, the reaction cell 36 is shown in longitudinal section (with lamp 16 omitted for clarity). The reaction cell 36 is defined by two stators 18a and 18b and a portion of the reaction chamber 12. Each stator 18a, 18b has blades 28 and slots 30 that are configured to redirect the flow in the liquid from the general direction of flow shown by the arrows 26, such that the liquid leaving the stator 18a has a circular flow pattern shown by the arrow 38. Each stator 18a and 18b has a rim 40 for securing the stator to the wall 14 of the reaction chamber 12.

The head pressure or back pressure of the liquid on the bearing surface of the stator 18 causes the liquid to flow through the slots 30 and into the reaction chamber 12. On entering the reaction chamber 12 the liquid is directed by the slots 30 to flow towards the wall 14 of the reaction chamber 12. The wall 14 restrains the flow and the combination of the slots 30 and wall 14 direct the liquid to swirl around the ultraviolet lamp (not shown). The flow of liquid swirls around inside the reaction chamber 12, passing through the reaction chamber 14 until it reaches the layer of photocatalyst particles 50. On reaching the layer of photocatalyst particles 50 the liquid flow is slowed by the friction generated between the liquid and the photocatalyst particles 50. The momentum in the liquid however carries it through the layer of photocatalyst particles 50, generating a turbulent liquid flow between the photocatalyst particles 50.

For a successful reaction to take place, the molecules of a reactant or contaminant in the liquid must come into contact with an active site at or near an outer surface of a photocatalyst particle 50 in the presence of a free radical. The turbulent liquid flow through the layer of photocatalyst particles 50 increases the efficiency of the catalytic reaction. The turbulent, non-linear, swirling and/or tortuous liquid flow increases the residence time of the molecules of reactants or contaminants in the liquid in the reaction chamber 12 and increases the length of time the molecules of reactants or contaminants in the liquid are in contact with the photocatalyst particles 50, compared with, for example, a laminar liquid flow in the direction 26. The flow is directed through the layer and between the particles in the layer with an increase path length. Thus there is an increased likelihood of a molecule of reactant or contaminant (not shown) in the liquid coming into contact with an active site (not shown) of a photocatalyst particle 50.

The flow may be sufficient to agitate or mobilise the particles (although agitation may not occur in all embodiments and aspects of the invention). As the photocatalyst particles move in the flow, different parts of their surfaces are exposed to light from the light source. Agitation improves the mass transfer of molecules in the fluid to and from the surface of the photocatalyst particles, and the surfaces of the particles may be cleaned by their contact with other photocatalyst particles. The cleaning may remove scale deposits that build up on the surfaces of the photocatalyst particles exposed to the fluid.

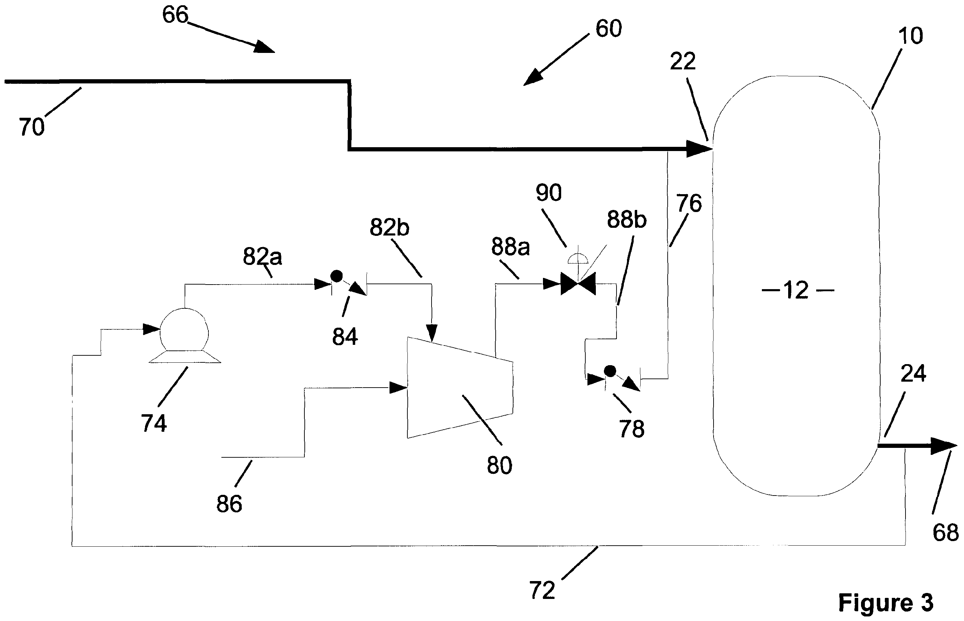

Referring to Figure 3, there is shown schematically a representation of a reactor system generally shown at 60 in which is implemented the reactor 10 in conjunction with an aeration system 66, fluidly connected to the reactor 10 via the inlet 22. The liquid is aerated prior to entering the reaction chamber 12 via inlet 22 to increase the concentration of dissolved oxygen in the liquid by introducing oxygen into the liquid under pressure.

The system 60 comprises a liquid inlet stream 70, which delivers liquid to be treated to the reactor 10. Supply pipe 76 connects a non-return valve 78 of the aeration system 66 and the liquid inlet stream 70, upstream of a position at which the liquid enters the reaction chamber 12 via the inlet 22. A pipe 72 connects the exit stream 68 from the reactor 10 to a pressure vessel or compressor unit 80 in the aeration system 66 via a pump 74 so that in use, a portion of the exit stream 68 from the reactor 10 is supplied to the pressure vessel 80. This configuration is particularly suited to a liquid inlet stream 70 that is heavily contaminated and when the flow rate of the liquid inlet stream 70 is high.

The pump 74 is connected to the pressure vessel 80 via pipes 82a and 82b and a non-return valve 84. Compressed air is supplied to the pressure vessel 80 via pipe 86. By introducing air into the liquid under pressure, the liquid is aerated and the concentration of dissolved oxygen in the liquid is increased. The aerated liquid is transferred to the supply pipe 76 via pipe 88a, an adjustable pressure relief valve 90, pipe 88b and non-return valve 78. The adjustable pressure relief valve 90 allows controlled release of the pressurised liquid from the pressure vessel 80 to the supply pipe 76. Non-return valves 78 and 84 ensure one-way flow of the fluid through the aeration system 66.

When the liquid is allowed to depressurise, some of the gas is released and the dissolved gas begins to come out of solution in the form of bubbles. The release of gas causes a reduction in the level of dissolved oxygen but the gas is not released instantaneously upon depressurisation. By fine-tuning parameters such as the flow rate of the liquid, the reactor 12 can be set up such that the notable reduction in the concentration of dissolved oxygen does not occur whilst the liquid is passing through the reaction chamber 12.

In an alternative embodiment, the reactor 10 can be set up such that the gas is deliberately released from the liquid on entry into the reaction chamber 12. The release of pressure generates a fine mist of bubbles having a uniform diameter, which help to control the concentration of dissolved oxygen in the liquid flow. In a further alternative embodiment the bubbles may assist to agitate the photocatalyst particles. The fine mist of bubbles is entrained in the liquid flow as it swirls around inside the reaction chamber 12 and through the layer of photocatalyst particles. In alternative embodiments oxygen or ozone gas is dissolved into the liquid rather than compressed air.

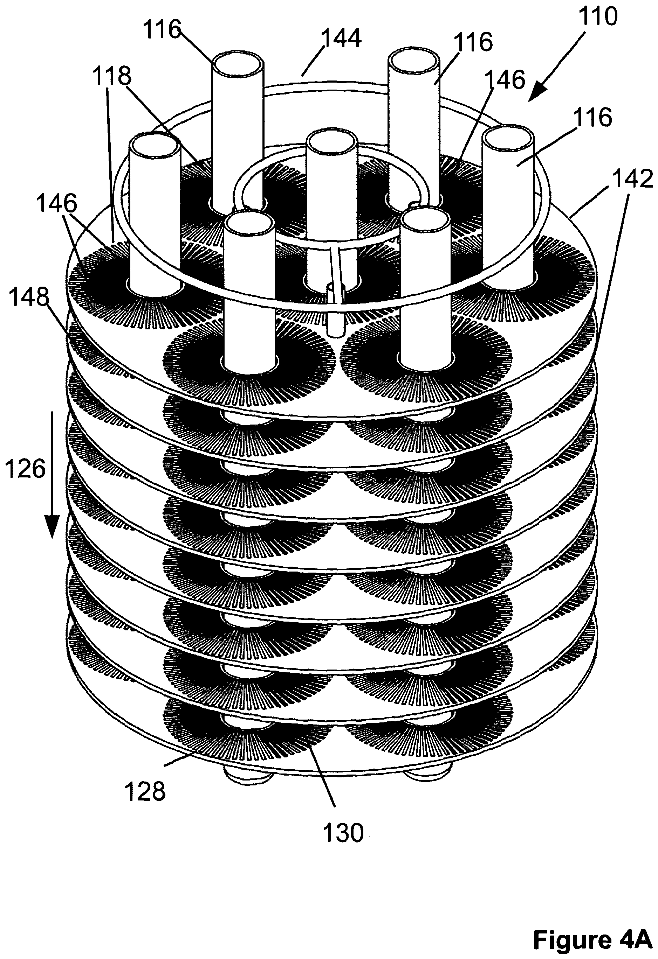

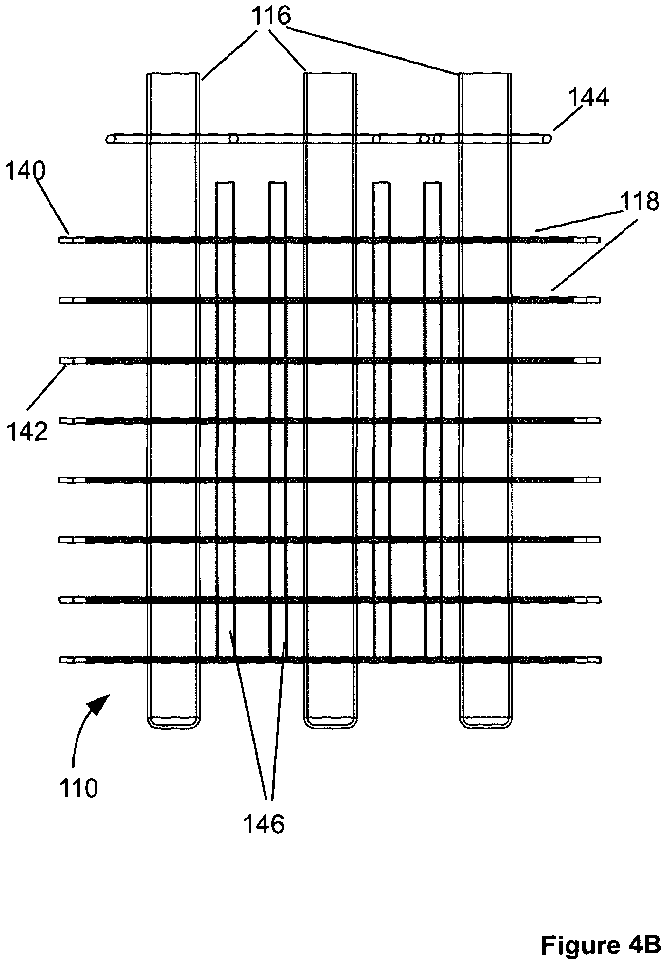

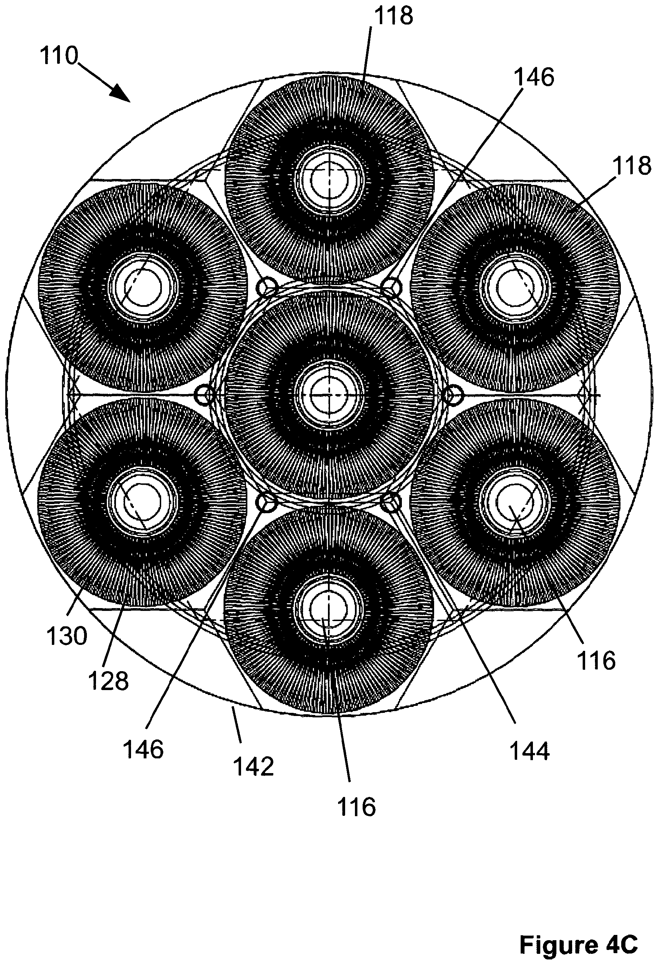

Now referring to Figures 4A to 4C, there is shown a reactor 110 in accordance with an alternative embodiment of the invention, shown respectively in perspective view, in cross-section, and in plan view. The reactor 110 is configured as a photocatalytic reactor, similar to the reactor 10 shown in Figures 1A to 1C and its operation will be understood from the foregoing description. The housing of the reactor 110 is omitted for clarity of internal components. The reactor 110 differs from the reactor 10 shown in Figures 1A to 1C in that there are provided multiple stators 118 on plates 142. As described with reference to Figures 1A to 1C, each stator 118 comprises blades 128 and slots 130. In this embodiment of the invention each plate 142 has seven stators 118 distributed over the plate 142. The reactor 110 also comprises ultraviolet lamps 116, a lamp support ring 144 and supports 146. The plates 142 are secured to the supports 146 at the gaps 148 in the plates 142 between the stators 128. The supports 146 provide a structure onto which the plates 142 are mounted. The plates 142 of stators 128 are mounted equidistantly throughout the reactor 110. In alternative embodiments the distance between the plates 142 may vary. Flow is generally in a direction 126 downward through the reactor 110.

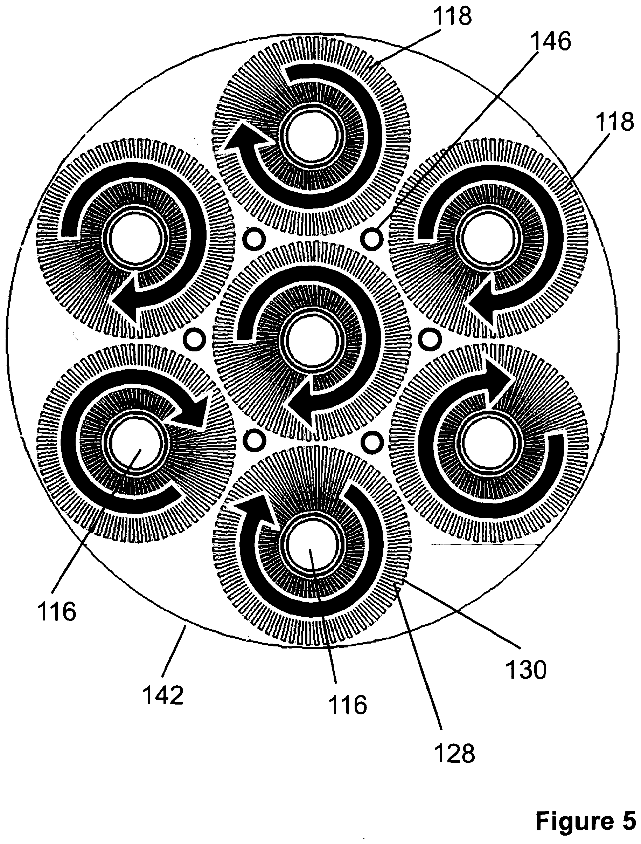

Figure 5, shows schematically a representation of a plate 142 in accordance with the embodiment of Figures 4A to 4C , shown in plan view. The slots 130 between the blades 128 of each stator 118 are shaped direct liquid passing through the plate to swirl in a clockwise direction around the ultraviolet lamp 116 located at the axis of the stator 118. The slots 130 in each of the stators 118 direct the liquid flow in a clockwise direction, so the liquid flow from one stator 118 contra-rotates relative to the liquid flow from an adjacent stator 118 at the point of contact between the two liquid flows. This contra-rotation generates an area of shear flow and increases the turbulence of the liquid flow contacting each layer of photocatalyst particles (not shown) located below the plate 142 of stators 128.

In an alternative embodiment the slots 130 in one stator 118 direct the liquid flow in a clockwise direction whilst the slots 130 in other stators 118 direct the liquid flow in an anticlockwise direction. Other flow arrangements are within the scope of the invention.

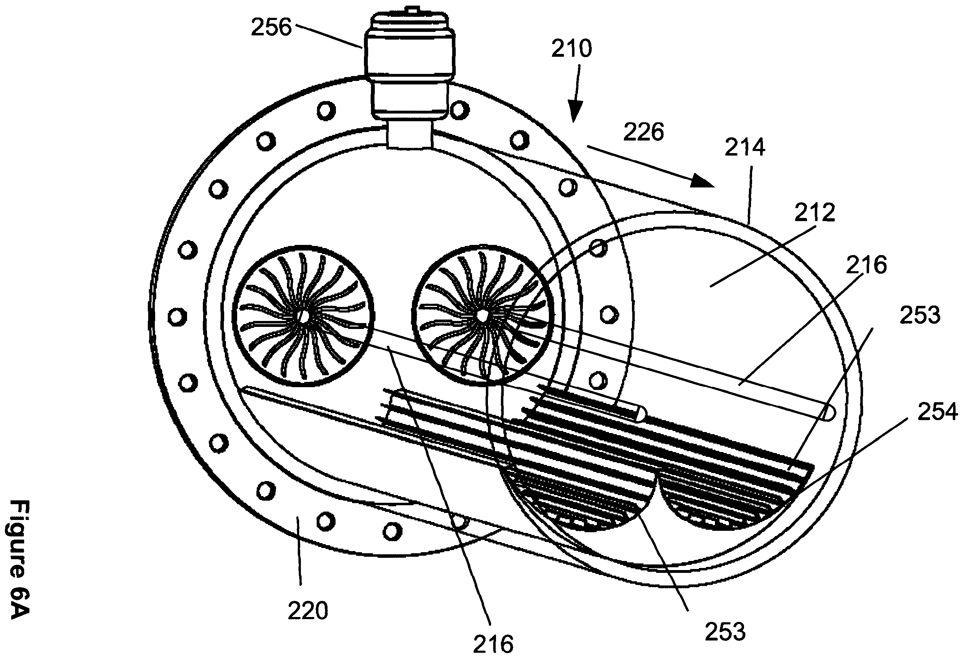

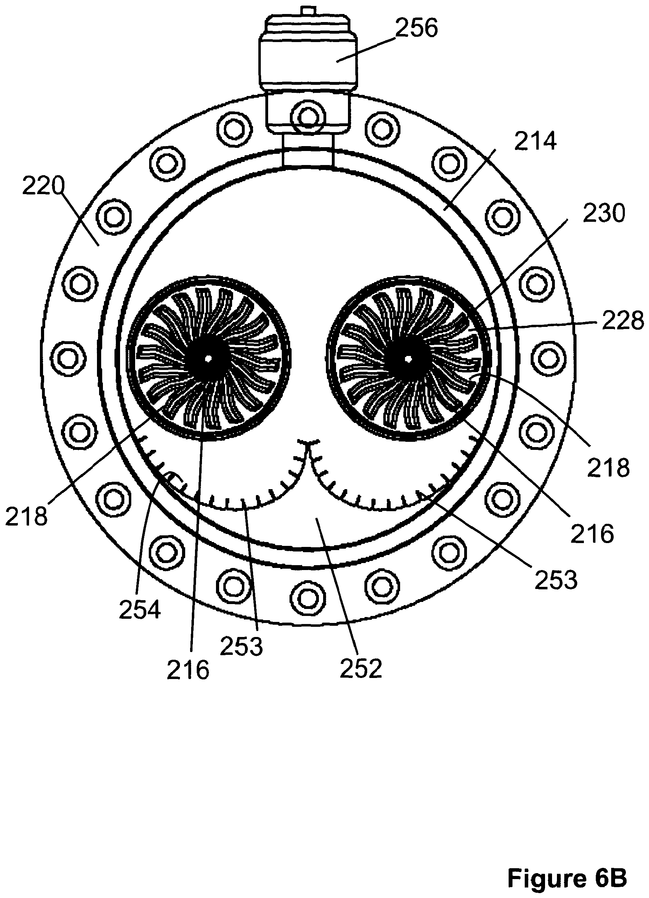

Referring to Figures 6A to 6B, there is shown a reactor 210 in accordance with a further alternative embodiment of the invention. In Figure 6A, the reactor is shown in perspective view (with some features made transparent) and in Figure 6B, is shown in a front elevation.

The reactor 210 shown in Figures 6A to 6B is configured as a photocatalytic reactor and comprises a flow-through reaction chamber 212. The reactor 210 is similar to reactors 10 and 110 and will be understood from the foregoing description. The reactor 210 differs from the reactor 10 shown in Figures 1A to 1C in that the reaction chamber 212 is mounted horizontally not vertically, with a general flow direction shown by the arrow 226. The wall 214 and end plate 220 define the reaction chamber 212.

Stators 218 are mounted at the end of the reaction chamber 212 in the end plate 220. The stators 218 have blades 228 and slots 230 that are configured to redirect the flow in the liquid entering the reaction chamber 212. Inside the reaction chamber 212 there are mounted ultraviolet lamps 216. The ultraviolet lamps 216 are mounted longitudinally and substantially concentrically with the stators 218 in the reaction chamber 212. In use, the liquid flow is directed by the slots 230 in the stators 218 to swirl around the ultraviolet lamps 216 and over the bearing surface 252.

The bearing surface 252 comprises a pair of a trough-shaped baffled surfaces 253 having baffles 254. The baffles 254 retain the photocatalyst particles in the liquid flow, restricting the photocatalyst particles from being carried around the reaction chamber 212 by the redirected flow, and facilitating the liquid flow passing through the layer. The trough-shaped baffled surface 252 is shaped to match the profile of the stators 218 and ultraviolet lamps 216. The relative position of the ultraviolet lamps 216 and the baffled surface 252 provides an even and complete illumination of the photocatalyst particles.

Like the reactor 10, the photocatalyst particles are pellets including titanium dioxide (TiO₂). The liquid is aerated prior to entering the reaction chamber 212 via stators 218 (as will be described below) to increase the concentration of dissolved oxygen in the liquid. The reactor 210 therefore further comprises a relief valve 256 mounted at an uppermost surface of the wall 214 of the reaction chamber 212. The relief valve 256 has an opening 258 through which gas bubbles (not shown) can escape from the liquid inside the reaction chamber 212 to the outside.

In an alternative embodiment the relief valve 256 is coupled to a bubble bar that extends along the longitudinal axis of the reaction chamber 212 and into which bubbles released from the liquid inside the chamber 212 can collect. The bubble bar directs the bubbles to the relief valve 256 for venting to the outside.

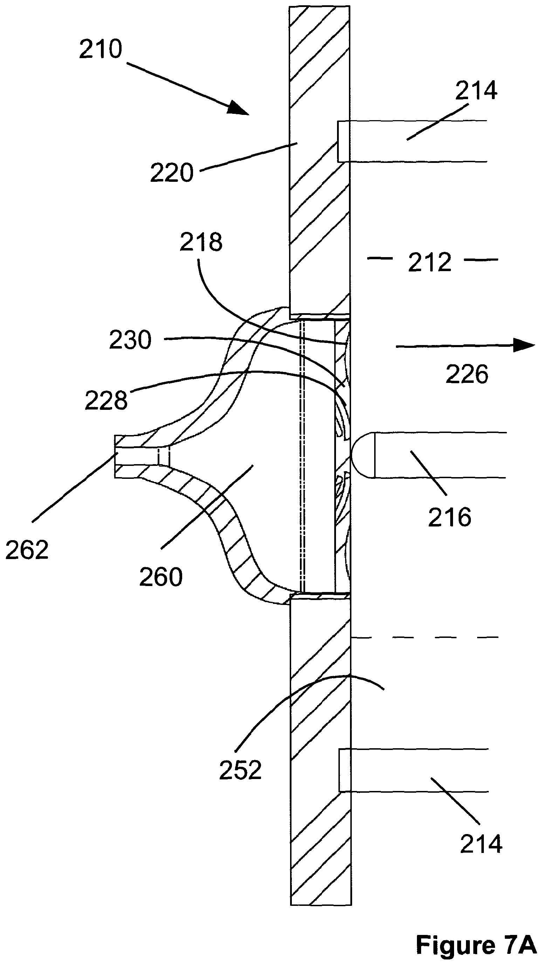

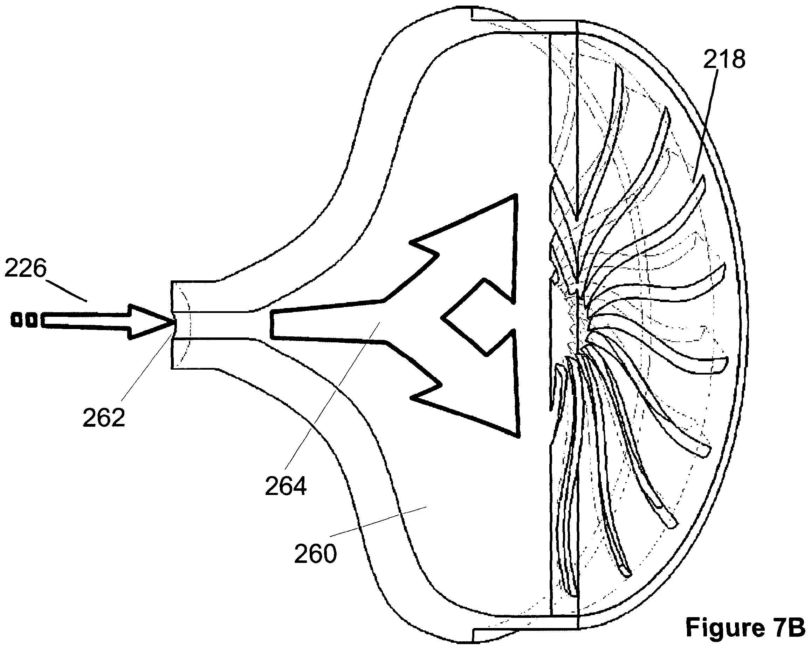

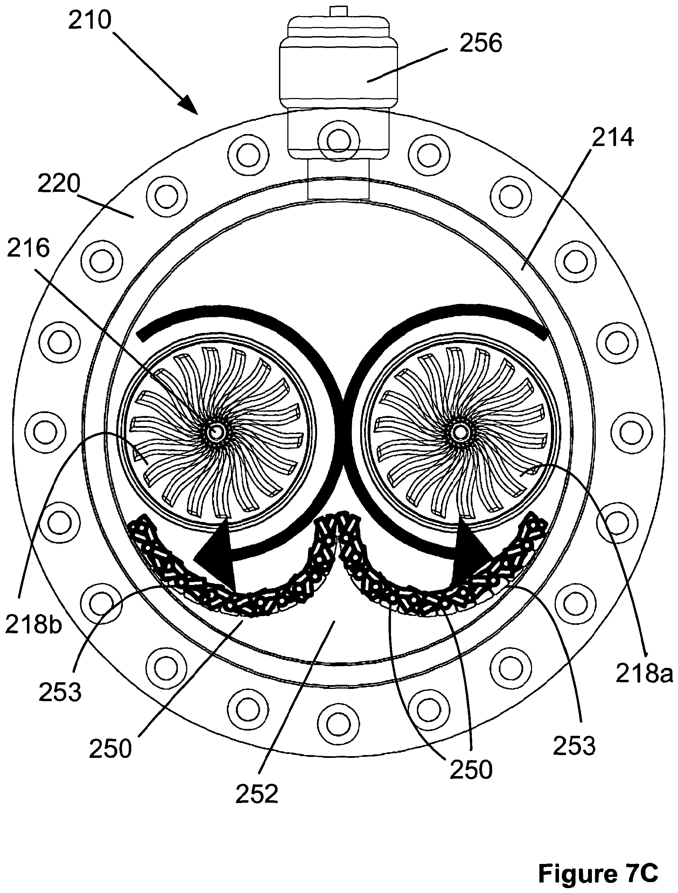

Principles of use of the reactor 210 will now be described with reference to Figures 7A to 7C. Figure 7A is a sectional view of a part of the reactor 210; Figure 7B shows a part-sectional view of a stator component and Figure 7C shows a sectional view of the reactor 210. Liquid enters the reaction chamber 212 through the stators 218 such that the flow of liquid in the reaction chamber 212 liquid flows through the reaction chamber 212 in the general direction of flow indicated by the arrow 226. The general direction of flow 226 is parallel to the longitudinal axis of the reaction chamber 212 and the longitudinal axis of the ultraviolet lamps 216.

Liquid supplied to the reaction chamber 212 includes dissolved gas, and passes into a decompression chamber 260 via an inlet 262. Decompression of the liquid generates fine bubbles that are uniformly distributed throughout the liquid in the decompression chamber, as indicated by the arrows 264. The liquid and bubbles (not shown) then pass out of the decompression chamber 260 through the slots 230 of the stator 218, directed by the blades 228. Each stator 218 has slots 230 and blades 228 for directing liquid flow to swirl around the ultraviolet lamps 216 located at the centre of the stators 218

In an alternative embodiment the decompression chamber 260 has a port to remove unwanted gas bubbles from the decompression chamber 260. In this alternative embodiment only liquid passes through the slots 230 in the stator 218.

A layer of photocatalyst particles 250 is provided on the bearing surface 252 in the reaction chamber, which in this case is formed in two trough-shaped baffled surfaces 253. The stators 218 redirect the flow from the general direction of the flow and through the the layer of photocatalyst particles 250. The slots 230a in the first stator 218a direct the liquid flow in a clockwise direction and the slots 230b in the second stator 218b direct the liquid flow in an anticlockwise direction, so the liquid flow from the first stator 218a rotates in the same direction as the liquid flow from the second stator 218b at the point of contact between the two liquid flow paths. This generates an area of flow that is reinforced and therefore increases the turbulence of the liquid flow contacting the layer of photocatalyst particles 250. The baffles 254 restrict movement of the photocatalyst particles 250 around the circumference of the reaction chamber 212 with the redirected flow.

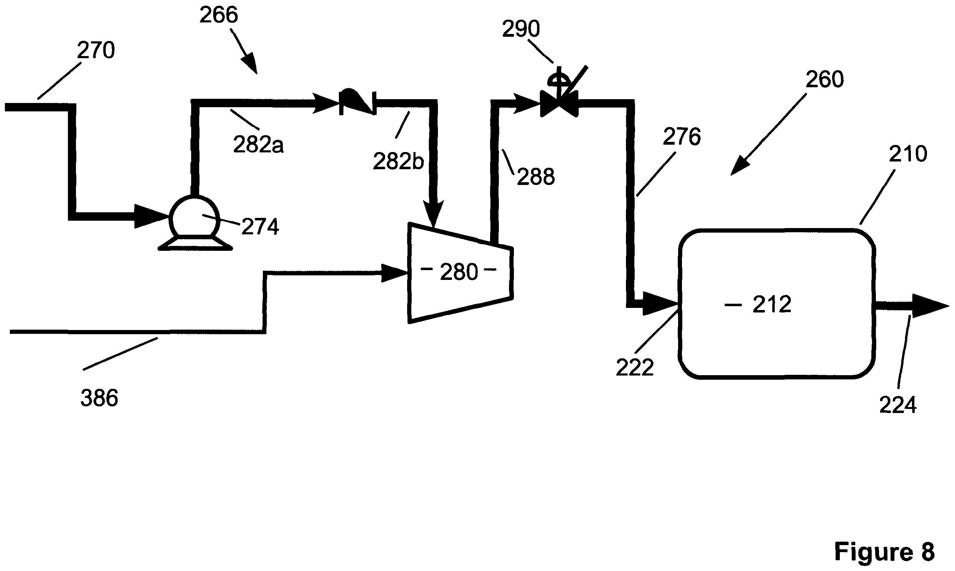

Referring to Figure 8 there is shown schematically a representation of a reactor system generally shown at 280 in which is implemented the reactor 210 in conjunction with an aeration system 266, fluidly connected to the reactor 210 via the inlet 222. The reactor system 266 is particularly suited to a liquid inlet stream 270 that contains a low concentration of contaminants.

A liquid inlet stream 270 providing fluid to be treated is supplied to a pump 274 in the aeration system 266, such that all fluid in the liquid inlet stream 270 passes to a pressure vessel or compressor unit 280 via pipes 282a and 282b and a non-return valve 284. Compressed air is supplied to the pressure vessel 280 via a pipe 286 to generate aerated liquid, which is transferred to the supply pipe 276 via pipe 288 and an adjustable pressure relief valve 290. The aerated liquid is passed through the reaction chamber 212 to the outlet 224 at an opposing end of the reactor 210.

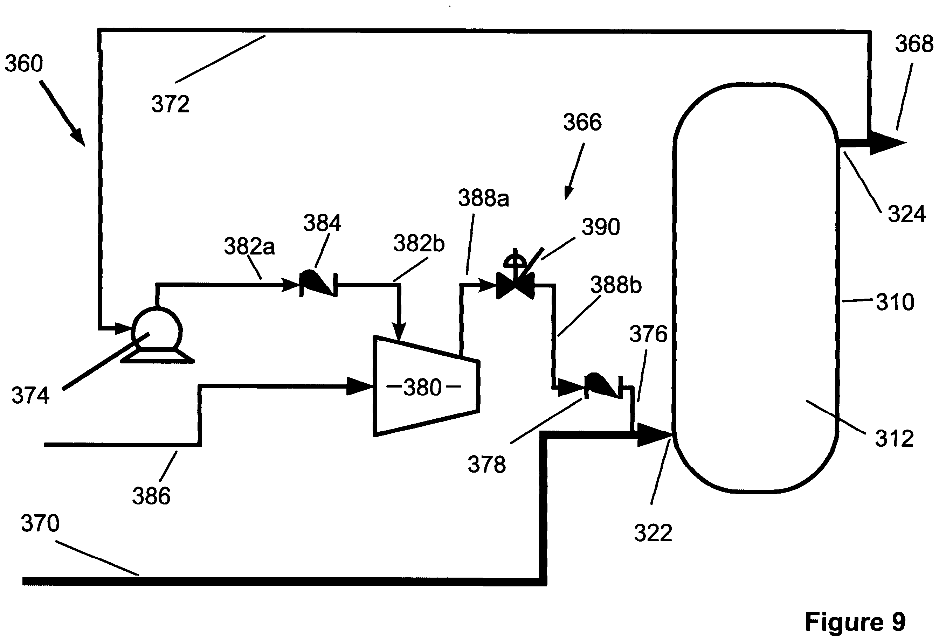

Figure 9 shows schematically a representation of a reactor system generally shown at 360 which implements a reactor 310 in conjunction with an aeration system 366, fluidly connected to the reactor 310 via the inlet 322. The component parts and operation of the reactor system 360 will be understood from the foregoing description of Figure 3. However, the reactor 310 differs from the reactor 10 shown in Figures 1A to 1C and Figure 3 in that the inlet 322 is positioned at the bottom of the reactor 310. In use, the aerated liquid passes up through the reaction chamber 312 to the outlet 324 at the top of the reactor 310. The configuration of reactor system 360 is also particularly suited to a liquid inlet stream 370 that is heavily contaminated and when the flow rate of the liquid inlet stream 370 is high.

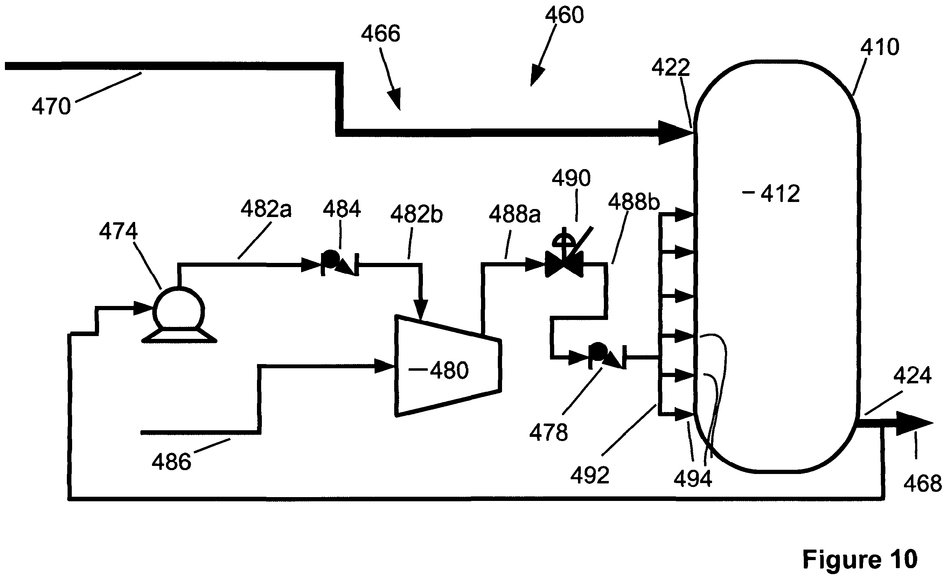

Figure 10 shows schematically a representation of a reactor system according to another embodiment of the invention, generally shown at 460 in which is implemented a reactor 410 in conjunction with an aeration system 466, fluidly connected to the reactor 410 via the inlet 422.

The component parts and operation of the aeration system 466 will be understood from the foregoing description of Figure 3. The reactor 410 and aeration system 466 differ from the reactor 10 and aeration system 66 shown in Figure 3 in that the supply pipe 476 connects a non-return valve 478 of the aeration system 466 via a manifold 492. The manifold 492 has outlets 494 that supply the aerated liquid to the individual reaction cells (not shown) in the reaction chamber 412. The aeration system 466 allows aerated liquid to be introduced at different locations spatially separated over the longitudinal axis of the reaction chamber 412, thereby improving efficiency of the catalytic reactions in each reaction cell.

In the embodiments of Figures 3, 8, 9 and 10, the liquid is aerated prior to entering the reaction chambers 12, 212, 312 and 412 via inlets 22, 222, 322 and 422 to increase the concentration of dissolved oxygen in the liquid. The liquid is aerated before it enters the reaction chambers by introducing oxygen gas into the liquid under pressure. Aerating the liquid outside the reaction chambers is an efficient way of increasing the concentration of dissolved oxygen in the liquid. Other known techniques can also be used to increase the concentration of dissolved oxygen in the liquid flow before it enters the reaction chamber, or while in the reaction chamber. For example, a ceramic or sintered metal diffuser can be used to produce a fine mist of bubbles with a high surface to volume ratio of the bubbles to promote the absorption of oxygen by the liquid. Diffusers can be used to treat liquid inside the reaction chamber or to treat the liquid before it enters the reaction. A fine mist of bubbles can also be generated using ultrasound. One or more nozzles or jets can be used to introduce bubbles of air or oxygen into the reaction chambers from a source of compressed air or oxygen respectively. The nozzles or jets may direct the bubbles in the same or opposite direction as the liquid flow. Dilute hydrogen peroxide can be added to the liquid to increase the concentration of dissolved oxygen in the liquid. Reducing the temperature of the liquid or controlling the pH in the reaction chambers also increases the concentration of oxygen that can be dissolved in the liquid.

The present invention has numerous applications to the treatment of fluids containing a broad range of natural and/or synthetic organic compounds, for example organic contaminants. The treatment of fluid using the reactors 10, 210, 310 and 410 may simultaneously remove two or more of the organic compounds from the wastewater.

One application of the reactors described is treatment of wastewater collected from the cooling towers of power stations, which are known to contain pathogens such as legionella and other related species. The reactors of the present invention can be used to treat the contaminated wastewater for subsequent reuse or discharge into the local natural water system.

The present invention can be applied to the treatment of water contaminated with cyanobacteria to a level of purity suitable for drinking water. The reactors of embodiments of the invention may be sized to be portable and the use of low voltage ultraviolet lamps also makes this system suitable for countries where the access to electricity is limited. Other known systems for the treatment of contaminated or wastewater are often energy intensive. Using a transparent material for the wall 14 of the reactor 10 allows the use of natural light and therefore negates the need for an electricity supply.

The present invention provides an apparatus and method for carrying out a photocatalytic reaction. The apparatus comprises a reaction chamber having a longitudinal axis and comprising a fluid inlet and a fluid outlet displaced in a longitudinal direction. A bearing surface is provided for a layer of mobile photocatalyst particles disposed between the fluid inlet and the fluid outlet, and a reactant fluid flowing between the fluid inlet and the fluid outlet contacts the layer of mobile photocatalyst particle. A formation is provided to redirect the fluid flow through the layer of mobile photocatalyst particles to increase the contact of the fluid with the layer of mobile photocatalyst particles.

In some embodiments of the invention, the flow may be turbulent and may be sufficient to agitate or mobilise the photocatalyst particles. This may improve the reaction efficiency by providing improved uniformity of light exposure; improved mass transfer; and/or by cleaning the surface of the photocatalyst particles.

The foregoing description of the invention has been presented for the purposes of illustration and description and is not intended to be exhaustive or to limit the invention to the precise form disclosed. The described embodiments were chosen and described in order to best explain the principles of the invention and its practical application to thereby enable others skilled in the art to best utilise the invention in various embodiments and with various modifications as are suited to the particular use contemplated. Therefore, further modifications or improvements may be incorporated without departing from the scope of the invention herein intended. In particular, it will be apparent that the different flow and aeration systems described with reference to Figures 3, 8, 9 and 10 can be configured for use with any of the reactor designs according to embodiments of the invention.

## Claims

1. An apparatus (10, 110, 210, 310, 410) for carrying out a photocatalytic reaction on a liquid, the apparatus comprising:
a reaction chamber (12, 212, 312, 412) having a longitudinal axis and comprising a fluid inlet (22, 222, 322, 422) and a fluid outlet (24, 224, 324) displaced in a longitudinal direction of the reaction chamber;
a layer of mobile photocatalyst particles (50, 250); and
a bearing surface (252) for the layer of mobile photocatalyst particles disposed between the fluid inlet and the fluid outlet, such that in use a liquid to be treated flows between the fluid inlet and the fluid outlet and contacts the layer of mobile photocatalyst particles;
wherein the apparatus further comprises at least one formation (28, 128, 228) comprising one or more blades configured to redirect the flow of the liquid to be treated and introduce a circular (38), elliptical, rotational or helical component to the flow through the layer of mobile photocatalyst particles to agitate or mobilise the mobile photocatalyst particles.

2. The apparatus as claimed in claim 1, wherein the formation is formed in a flow member arranged across the longitudinal axis of the apparatus.

3. The apparatus as claimed in any preceding claim, arranged to induce a turbulent flow of the liquid in the reaction chamber (12, 212, 312, 412).

4. The apparatus as claimed in any preceding claim, further comprising a light source (16, 116, 216) oriented in the longitudinal direction of the reaction chamber (12, 212, 312, 412).

5. The apparatus as claimed in claim 2, or claim 3 or 4 when dependent on claim 2, wherein the flow member comprises multiple formations to create different flow patterns in different parts of a cross-sectional area of the reaction chamber.

6. The apparatus as claimed in any preceding claim, wherein the photocatalyst particles are negatively buoyant, and rest on the bearing surface (252).

7. The apparatus as claimed in any preceding claim wherein the reaction chamber (12, 312, 412) comprises a plurality of spatially separated reaction cells (36) and each reaction cell comprises a layer of mobile photocatalyst particles (50).

8. The apparatus as claimed in any preceding claim, comprising a plurality of layers of mobile photocatalyst particles (50) and a plurality of corresponding formations (28, 128, 228), wherein each of the formations is configured to redirect the liquid flow through its corresponding layer of mobile photocatalyst particles (50).

9. The apparatus as claimed in any preceding claim, wherein the bearing surface (252) is a substantially horizontal support.

10. The apparatus as claimed in any preceding claim, wherein the layer of mobile photocatalyst particles (50) is arranged across the longitudinal direction of the reaction chamber (12, 312, 412).

11. A method of carrying out a photocatalytic reaction, the method comprising:
providing a layer of mobile photocatalyst particles (50, 250) on a bearing surface within a reaction chamber (12, 212, 312, 412);
providing a flow of liquid to be treated through the reaction chamber so as to contact the photocatalyst particles;
redirecting the flow of liquid to be treated and introducing a circular (38), elliptical, rotational or helical component to the flow through the layer of mobile photocatalyst particles to agitate or mobilise the mobile photocatalyst particles.

12. The method as claimed in claim 11, further comprising inducing a turbulent flow of the liquid in the reaction chamber (12, 212, 312, 412).

13. The method as claimed in claim any of claim 11 or claim 12, comprising providing a light source (16, 116, 216) within the reaction chamber (12, 212, 312, 412), wherein the circular, elliptical, rotational or helical component to the flow in the liquid is about an axis of the light source.

14. The method as claimed in any of claims 11 to 13, comprising flowing the liquid through a plurality of spatially separated reaction cells (36).

15. The method as claimed in any of claims 11 to 14, further comprising creating different flow patterns in different parts of a cross-sectional area of the reaction chamber.

## Patentansprüche

1. Eine Vorrichtung (10, 110, 210, 310, 410) zur Ausführung einer photokatalytischen Reaktion an einer Flüssigkeit, wobei die Vorrichtung Folgendes umfasst:
eine Reaktionskammer (12, 212, 312, 412) mit einer Längsachse, die einen Fluideinlass (22, 222, 322, 422) und einen Fluidauslass (24, 224, 324) umfasst, die in einer Längsrichtung der Reaktionskammer versetzt sind,
eine Schicht aus beweglichen Photokatalysatorteilchen (50, 250) und
eine tragende Oberfläche (252) für die Schicht aus beweglichen Photokatalysatorteilchen, die zwischen dem Fluideinlass und dem Fluidauslass angeordnet ist, sodass im Gebrauch eine zu behandelnde Flüssigkeit zwischen dem Fluideinlass und dem Fluidauslass strömt und die Schicht aus beweglichen Photokatalysatorteilchen berührt,
wobei die Vorrichtung ferner mindestens eine Formation (28, 128, 228) umfasst, die eine oder mehrere Klingen umfasst, die so konfiguriert sind, dass sie den Fluss der zu behandelnden Flüssigkeit umlenken und eine kreisförmige (38), elliptische, rotatorische oder helikale Komponente in den Fluss durch die Schicht aus beweglichen Photokatalysatorteilchen einführen, um die beweglichen Photokatalysatorteilchen zu bewegen oder zu mobilisieren.

2. Die Vorrichtung nach Anspruch 1, wobei die Formation in einem Strömungselement ausgebildet ist, das quer zur Längsachse der Vorrichtung angeordnet ist.

3. Die Vorrichtung nach einem der vorhergehenden Ansprüche, die angeordnet ist, dass sie eine turbulente Strömung der Flüssigkeit in der Reaktionskammer (12, 212, 312, 412) induziert.

4. Die Vorrichtung nach einem der vorhergehenden Ansprüche, die ferner eine Lichtquelle (16, 116, 216) umfasst, die in der Längsrichtung der Reaktionskammer (12, 212, 312, 412) ausgerichtet ist.

5. Die Vorrichtung nach Anspruch 2 oder Anspruch 3 oder 4, wenn abhängig von Anspruch 2, wobei das Strömungselement mehrere Formationen umfasst, die unterschiedliche Strömungsmuster in verschiedenen Teilen einer Querschnittsfläche der Reaktionskammer erzeugen.

6. Die Vorrichtung nach einem der vorhergehenden Ansprüche, wobei die Photokatalysatorteilchen negativ schwimmfähig sind und auf der tragenden Oberfläche (252) ruhen.

7. Die Vorrichtung nach einem der vorhergehenden Ansprüche, wobei die Reaktionskammer (12, 312, 412) eine Mehrzahl von räumlich getrennten Reaktionszellen (36) umfasst und jede Reaktionszelle eine Schicht aus beweglichen Photokatalysatorteilchen (50) umfasst.

8. Die Vorrichtung nach einem der vorhergehenden Ansprüche, die eine Vielzahl von Schichten von beweglichen Photokatalysatorteilchen (50) und eine Vielzahl von entsprechenden Formationen (28, 128, 228) umfasst, wobei jede der Formationen so konfiguriert ist, dass sie den Flüssigkeitsstrom durch die jeweilige Schicht von beweglichen Photokatalysatorteilchen (50) umlenkt.

9. Die Vorrichtung nach einem der vorhergehenden Ansprüche, wobei die tragende Oberfläche (252) eine im Wesentlichen horizontale Stütze ist.

10. Die Vorrichtung nach einem der vorhergehenden Ansprüche, wobei die Schicht aus beweglichen Photokatalysatorteilchen (50) quer zur Längsrichtung der Reaktionskammer (12, 312, 412) angeordnet ist.

11. Ein Verfahren zur Durchführung einer photokatalytischen Reaktion, wobei das Verfahren Folgendes umfasst:
Bereitstellung einer Schicht aus beweglichen Photokatalysatorteilchen (50, 250) auf einer tragenden Oberfläche innerhalb einer Reaktionskammer (12, 212, 312, 412);
Bereitstellung eines Flusses von zu behandelnder Flüssigkeit durch die Reaktionskammer, wobei die Photokatalysatorteilchen berührt werden;
Umlenkung des Flusses der zu behandelnden Flüssigkeit und Einführung einer kreisförmigen (38), elliptischen, rotatorischen oder helikalen Komponente in den Fluss durch die Schicht aus beweglichen Photokatalysatorteilchen, um die beweglichen Photokatalysatorteilchen zu bewegen oder zu mobilisieren.

12. Das Verfahren nach Anspruch 11, das zudem die Induktion einer turbulenten Strömung der Flüssigkeit in der Reaktionskammer (12, 212, 312, 412) umfasst.

13. Das Verfahren nach Anspruch 11 oder Anspruch 12, das die Bereitstellung einer Lichtquelle (16, 116, 216) innerhalb der Reaktionskammer (12, 212, 312, 412) umfasst, wobei die kreisförmige, elliptische, rotatorische oder helikale Komponente zur Strömung in der Flüssigkeit auf eine Achse der Lichtquelle bezogen ist.

14. Das Verfahren nach einem der Ansprüche 11 bis 13, bei dem die Flüssigkeit durch mehrere räumlich getrennte Reaktionszellen (36) geleitet wird.

15. Das Verfahren nach einem der Ansprüche 11 bis 14, das zudem die Erzeugung unterschiedliche Strömungsmuster in verschiedenen Teilen einer Querschnittsfläche der Reaktionskammer umfasst.

## Revendications

1. Un appareillage (10, 110, 210, 310, 410) pour effectuer une réaction photocatalytique sur un liquide, l'appareillage comprenant :
une chambre de réaction (12, 212, 312, 412) ayant un axe longitudinal et comprenant une entrée de fluide (22, 222, 322, 422) et une sortie de fluide (24, 224, 324) décalées dans le sens longitudinal de la chambre de réaction ;
une couche de particules de photocatalyseur mobile (50, 250) ; et
une surface porteuse (252) pour la couche des particules de photocatalyseur mobile, disposée entre l'entrée de fluide et la sortie de fluide, de telle sorte que, en cours d'utilisation, le liquide à traiter s'écoule entre l'entrée de fluide et la sortie de fluide et contacte la couche des particules de photocatalyseur mobile ;
l'appareillage comportant en outre au moins une formation (28, 128, 228) comprenant une ou plusieurs lames configurées pour rediriger l'écoulement du liquide à traiter et pour introduire un mouvement circulaire (38), elliptique, rotationnel ou hélicoïdal dans l'écoulement à travers la couche des particules de photocatalyseur mobile pour les agiter ou pour les mobiliser.

2. L'appareillage conforme à la revendication 1, dans lequel la formation est un organe d'écoulement disposé à travers l'axe longitudinal de l'appareillage.

3. L'appareillage conforme à l'une des revendications précédentes, disposé pour induire un écoulement turbulent du liquide dans la chambre de réaction (12, 212, 312, 412).

4. L'appareillage conforme à l'une des revendications précédentes, comprenant en outre une source lumineuse (16, 116, 216) orientée dans la direction longitudinale de la chambre de réaction (12, 212, 312, 412).

5. L'appareillage conforme à la revendication 2, ou à la revendication 3 ou 4 dépendant de la revendication 2, dans lequel l'organe d'écoulement comprend plusieurs formations pour créer différents schémas d'écoulement dans différentes parties de la coupe transversale de la chambre de réaction.

6. L'appareillage conforme à l'une des revendications précédentes, dans lequel les particules de photocatalyseur ont une flottabilité négative et reposent sur la surface porteuse (252).

7. L'appareillage conforme à l'une des revendications précédentes, dans lequel la chambre de réaction (12, 312, 412) comprend plusieurs cellules de réaction distantes (36) et dans lequel chaque cellule de réaction comprend une couche de particules de photocatalyseur mobile (50).

8. L'appareillage conforme à l'une des revendications précédentes, comprenant plusieurs couches de particules de photocatalyseur mobile (50) et plusieurs formations correspondantes (28, 128, 228), dans lequel chaque formation est configurée pour rediriger l'écoulement liquide à travers la couche correspondante de particules de photocatalyseur mobile (50).

9. L'appareillage conforme à l'une des revendications précédentes, dans lequel la surface porteuse (252) est pratiquement horizontale.

10. L'appareillage conforme à l'une des revendications précédentes, dans lequel la couche des particules de photocatalyseur mobile (50) est disposée dans la direction longitudinale de la chambre de réaction (12, 212, 312, 412).

11. Une méthode pour effectuer une réaction photocatalytique, la méthode consistant à :
fournir une couche de particules de photocatalyseur mobile (50, 250) sur une surface porteuse dans une chambre de réaction (12, 212, 312, 412) ;
faire s'écouler le liquide à traiter à travers la chambre de réaction pour qu'il soit en contact avec les particules de photocatalyseur ;
rediriger l'écoulement du liquide à traiter et introduire un mouvement circulaire (38), elliptique, rotationnel ou hélicoïdal dans l'écoulement à travers la couche de particules de photocatalyseur mobile pour les agiter ou pour les mobiliser.

12. La méthode conforme à la revendication 11, consistant en outre à induire un écoulement turbulent du liquide dans la chambre de réaction (12, 212, 312, 412).

13. La méthode conforme à la revendication 11 ou à la revendication 12, consistant à introduire une source lumineuse (16, 116, 216) dans la chambre de réaction (12, 212, 312, 412), l'écoulement circulaire, elliptique, rotationnel ou hélicoïdal du liquide s'effectuant par rapport à l'axe de la source lumineuse.

14. La méthode conforme à l'une des revendications 11 à 13, consistant à faire s'écouler le liquide à travers plusieurs cellules de réaction distantes (36).

15. La méthode conforme à l'une des revendications 11 à 14, consistant en outre à créer différents schémas d'écoulement dans différentes parties de la coupe transversale de la chambre de réaction.
